Europäisches Patentamt

European Patent Office

Office européen des brevets

(19)

(11) Veröffentlichungsnummer: **0 078 334**
**B1**

(12) **EUROPÄISCHE PATENTSCHRIFT**

(45) Veröffentlichungstag der Patentschrift: **21.01.87**

(21) Anmeldenummer: **81109360.8**

(22) Anmeldetag: **30.10.81**

(51) Int. Cl.⁴: **G 01 F 1/11, G 01 F 25/00**

(54) **Eichfähiger Turbinenradgaszähler mit auswechselbarem Messeinsatz.**

(43) Veröffentlichungstag der Anmeldung:
**11.05.83 Patentblatt 83/19**

(45) Bekanntmachung des Hinweises auf die
Patenterteilung:
**21.01.87 Patentblatt 87/04**

(84) Benannte Vertragsstaaten:
**AT BE CH DE FR GB IT LI LU NL SE**

(56) Entgegenhaltungen:
**DE-A-2 702 319**
**DE-A-2 829 866**
**FR-C-1 288 912**
**GB-A-2 002 856**
**US-A-3 623 835**
**US-A-3 695 106**
**US-A-8 788 142**

(73) Patentinhaber: **Elster & AG Mess- und
Regeltechnik
Steinerstrasse 19 Postfach 129
D-6503 Mainz-Kastel (DE)**

(72) Erfinder: **Schmittner, Dieter, Dipl.-Ing.
Schlehenweg 9
D-6238 Hofheim (DE)**
Erfinder: **Schwarz, Manfred
Fleckenbornstrasse 18
D-6204 Taunusstein (DE)**

(74) Vertreter: **Wolgast, Rudolf, Dipl.-Chem. Dr. et al
Dipl.-Phys. Jürgen Weisse Dipl.Chem. Dr. Rudolf
Wolgast Bökenbusch 41 Postfach 11 03 86
D-5620 Velbert 11 Langenberg (DE)**

# Beschreibung

Die Erfindung betrifft einen Turbinenradgaszähler zur Messung des Durchflusses von Gasen, bestehend aus

(a) einem Rohrstück, das Anschlußmittel und einen seitlichen Ansatz aufweist,

(b) einem auswechselbaren, koaxial in das Rohrstück einsetzbaren, rohrförmigen Meßeinsatz, der

— einen rohrförmigen Mantelteil, welcher eine radiale Bohrung besitzt, die im eingebauten Zustand des Meßeinsatzes mit dem seitlichen Ansatz des Rohrstücks fluchtet, sowie

— einen Einlaufkörper, welcher mittels radialer Rippen koaxial in dem Mantelteil angeordnet ist,

— einen stromab von dem Einlaufkörper koaxial in dem Mantelteil angeordneten Auslaufkörper, der zusammen mit dem Einlaufkörper und der Innenwand des Mantelteils einen ringförmigen Durchflußkanal begrenzt und über Verbindungsstege starr mit dem Mantelteil verbunden ist,

— ein koaxial in dem Auslaufkörper angeordnetes Lagergehäuse, an dessen Stirnseiten eine Welle drehbar gelagert ist, und

— ein Turbinenrad, das an dem aus der einlaufkörperseitigen Stirnseite aus dem Lagergehäuse vorstehenden Ende der Welle befestigt ist und dessen Schaufeln in dem Durchflußkanal angeordnet sind,

(c) einem aufweist sowie aus an dem seitlichen Ansatz angebrachten Zahlwerk, das das Volumen des den Durchflußkanal durchfließenden Gases angezeigt und über eine Kupplung mit einer Übertragungswelle gekuppelt ist, welche durch eine Bohrung des seitlichen Ansatzes und die radiale Bohrung des Meßeinsatzes hindurch verlauft und mit der Welle des Turbinenrades in Antriebsverbindung steht.

Ein solcher Turbinenradgaszähler ist bekannt durch die DE—A—2 702 319.

Dieser bekannte Turbinenradgaszähler enthält einen Meßeinsatz der vorgenannten Art, der vormontiert und dadurch leicht prüfbar ist. Eine Eichung des bekannten Turbinenradgaszählers ist jedoch nur durch die Eichung des gesamten Gerätes auf einem amtlich zugelassenen Prüfstand möglich, nicht aber am eigentlichen Betriebsort. Diese Eichung ist immer dann erforderlich, wenn am Turbinenradgaszähler eine Wartung oder Reparatur des Meßeinsatzes notwendig geworden war. Dazu mußte bisher der Turbinenradgaszähler als Ganzes aus der jeweiligen Rohrleitung ausgebaut und -gegebenenfalls nach Wartung oder Reparatur des Meßeinsatzes- in einem amtlich zugelassenen Prüfstand geprüft und geeicht werden. Im allgemeinen betrug der Zeitbedarf dafür ca. 3 bis 5 Wochen, so daß am Betriebsort ein zweiter Turbinenradgaszähler in Reserve gehalten oder in eine Zweigleitung eingebaut werden mußte.

Durch die US—A—3 695 106 ist ein Turbinenradgaszähler bekannt, bei welchem ein Meßeinsatz einen mit dem Turbinenrad zusammenwirkenden Impulsgeber enthält, der für ein vorgegebenes Volumen eines bestimmten Gases, das den Durchflußkanal durchfließt, eine bestimmte Anzahl von Impulsen erzeugt. Bei diesem Turbinenradgaszähler ist auch ein Anschluß für eine den statischen Druck messende Druckmeßvorrichtung vorgesehen. Dieser Anschluß mündet unmittelbar im Durchflußkanal.

Bei dem Turbinenradgaszähler nach der US—A—3 695 106 werden die von dem Impulsgeber gelieferten Impulse ständig gezählt und dienen als einziges Maß für das durch den Turbinenradgaszähler geflossene Gasvolumen. Die Anzahl der pro Gasvolumeneinheit gelieferten Impulse kann durch Variation der Anzahl der verwendeten rotierenden Magnete variiert werden. Ein von dem Turbinenrad mechanisch angetriebenes Meßwerk ist dort nicht vorgesehen und soll durch die Impulszählung gerade vermieden werden.

Durch die FR—A—1 288 912 ist ein Turbinenradgaszähler bekannt, bei welchem sin Meßeinsatz mit einem Turbinenrad in einem Rohrstück angeordnet ist, welches durch Anschlußflansche in eine Gasleitung eingebaut werden kann. Zwischen einem Mantelteil des Meßeinsatzes und dem Rohrstück ist ein Ringraum gebildet, der über Durchbrüche des Mantelteils mit dem Durchflußkanal in Verbindung steht.

Durch die GB—A—2 002 856 ist ein Meßeinsatz für Turbinenradwassekzähler bekannt, bei welchem zur Anpassung an Zählergehäuse von unterschiedlichem Durchmesser zwischen Turbinenrad und Zählwerk ein als Zahnradgetriebe ausgebildetes Geschwindigkeitswechselgetriebe vorgesehen ist.

Es ist weiter bekannt, an Turbinenradgaszählern mit dem Turbinenrad zusammenwirkende Meßfühler anzubringen, sei es zur Zählung von durch das Turbinenrad ausgelösten Impulsen (US—A—3 623 835, US—A—3 788 142) oder zur Überwachung des Turbinenrades selbst (DE—A—2 829 866).

Die Aufgabe der vorliegenden Erfindung besteht darin, einen am Betriebsort eichbaren Turbinenradgaszähler der eingangs genannten Art zu schaffen.

Erfindungsgemäß wird diese Aufgabe bei einem Turbinenradgaszähler der eingangs genannten Art dadurch gelöst, daß

(d) ein mit dem Durchflußkanal verbundener Druckraum mit einem Anschluß für eine Meßeinrichtung zur Messung des statischen Druckes in dem Druckraum vorgesehen ist,

(e) der Meßeinsatz einen mit dem Turbinenrad zusammenwirkenden Impulsgeber enthält, der für ein vorgegebenes Volumen eines bestimmten Gases, das den Durchflußkanal durchfließt, eine bestimmte Anzahl von Impulsen erzeugt, und

(f) das Zählwerk ein auswechselbares Übersetzungsgetriebe aufweist, so daß bei Abweichungen des mit dem Turbinenradgaszähler ermittelten, auf Standardbedingungen reduzierten Volumens von dem an einem Normal gaszähler ermittelten Volumen ein der Abweichung entsprechendes Übersetzungsgetriebe zur Kompensation dieser in der Zählwerksanzeige auftretenden Abweichung einbaubar ist.

Der Turbinenradgaszähler arbeitet mit einem Zählwerk, das mit der Welle des Turbinenrades mechanisch in Antriebsverbindung steht. Beim normalen Betrieb des Turbinenradgaszählers wird daher ohne elektrische Signalverarbeitungsmittel gearbeitet. Zusätzlich ist jedoch ein Impulsgeber zur Erzeugung elektrischer Impulse in Abhängigkeit vom Umlauf des Turbinenrades vorgesehen. Dieser dient aber nicht wie bei der US—A—3 695 106 für die normale Zählung des durchgeflossenen Gasvolumens sondern soll es ermöglichen, daß der Meßeinsatz getrennt von den übrigen Teilen des Turbinenradgaszählers geeicht werden kann.

Wenn ein Turbinengaszähler durch einen Defekt im Meßansatz ausfällt, dann wird der Meßeinsatz ausgebaut und durch einen geeichten Meßeinsatz ersetzt. Der Impulsgeber wird über eine Verbindungsleitung an einen elektronischen Zähler angeschlossen. Die nach Durchlauf von 1 m³ gemessene Impulszahl muß dann mit der bei der Eichung ermittelten Impulszahl übereinstimmen. Die Eichung des Turbinenradgaszählers wird somit auf die Eichung des Meßeinsatzes zurückgeführt.

Ein Verfahren zur Eichung eines in der vorstehend beschriebenen Weise mit mechanisch angetriebenem Meßwerk und Impulsgeber versehenen Turbinenradgaszählers ist gekennzeichnet durch die folgenden Schritte:

Einbau des Meßeinsatzes in eine Eichanlage, Durchleiten eines Gases während einer vorgewählten Zeit durch den Meßeinsatz bei einer gemessenen Strömungsgeschwindigkeit, einem gemessenen statischen und einem gemessenen barometrischen Druck und bei einer gemessenen Temperatur, Bestimmen der zugehörigen Anzahl von Impulsen und Berechnung und Reduktion des Gasvolumens auf Standardbedingungen,

anschließend Durchleiten dieses Gases während einer vorgewählten Zeit durch einen Normalgaszähler bei einer gemessenen Strömungsgeschwindigkeit, einem gemessenen statischen und einem gemessenen barometrischen Druck und bei einer gemessenen Temperatur, Bestimmen der zugehörigen Anzahl von Impulsen und Berechnung und Reduktion des Gasvolumens auf Standardbedingungen,

Bestimmung der Abweichung des berechneten und reduzierten Gasvolumens, das den Meßeinsatz durchsetzt hat, von dem berechneten und reduzierten Gasvolumen, das den Normalgaszähler durchsetzt hat, und Berechnen des Verhältnisses beider Gasvolumina,

Einbau eines auf das Verhältnis des Gasvolumina abgestimmten Übersetzungsgetriebes in das Zählwerk des nunmehr am Betriebsort installierten Meßeinsatzes und Anschließen des Impulsgebers des Turbinenradgaszählers an einen elektronischen Zähler und des Druckraums des Turbinenradgaszählers an eine Meßeinrichtung zur Bestimmung des statischen Drucks in dem Druckraum und Nacheichung des Turbinenradgaszählers am Betriebsort durch Durchleiten des Betriebsgases und Vergleich der an dem elektrischen Zähler angezeigten Anzahl von Impulsen mit dem am Zählwerk des Turbinenradgaszählers angezeigten Gasvolumen.

Vorteilhafte Weiterbildungen der Erfindung sind in den abhängigen Ansprüchen definiert.

Ausführungsbeispiele der Erfindung sind in den Abbildungen dargestellt und werden nachfolgend anhand der Bezugszeichen im einzelnen erläutert und beschrieben. Es zeigen

Fig. 1 einen Längsschnitt eines ersten Ausführungsbeispiels der erfindungsgemäßen Meßeinsatzes für einen Turbinenradgaszähler;

Fig. 2 einen Teil eines Längsschnitts durch eine modifizierte Ausführung des Meßeinsatzes nach Fig. 1 und

Fig. 3 einen teilweise abgebrochenen Längsschnitt durch einen erfindungsgemäßen Turbinenradgaszähler mit einem Meßeinsatz nach Fig. 1.

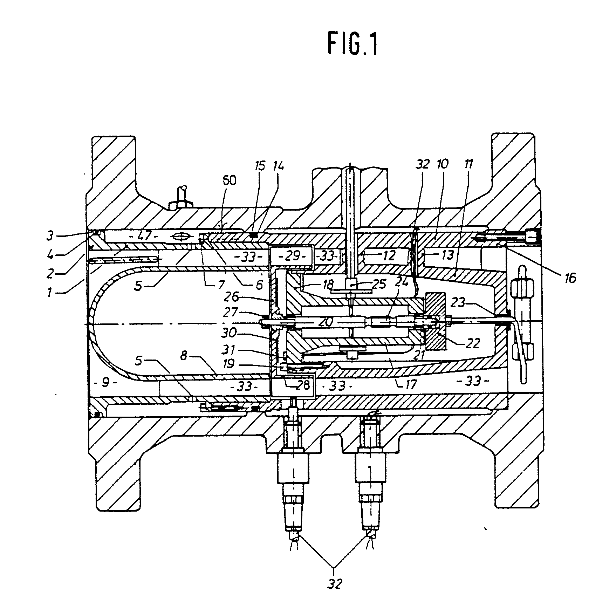

Der in Fig. 1 im Längsschnitt dargestellte Meßeinsatz besteht aus einem Einlaufteil 1, der an seinem freien Ende einen nach außen vorstehenden Ringflansch 2 mit einer in dessen Umfang eingearbeiteten Nut 3 trägt, der ein Dichtring 4 einliegt. Im mittleren Teil seiner Länge ist der Einlaufteil 1 mit über seinen Umfang verteilten Durchlässen 5 versehen. Eine Ringschulter 6 dient zur Befestigung des Einlaufteils 1 mit Schrauben 7 an der Stirnseite des nachfolgend beschriebenen Auslaufteils 10. In den Einlaufteil 1 ist ein becherförmiger Einlaufkörper 8 mit radial verlaufenden Rippen 9 koaxial so eingesetzt, daß das offene Ende des Einlaufkörpers 8 dem Auslaufteil 10 zugekehrt ist; der Einlaufkörper 8 ist gleich lang wie der Einlaufteil 1.

Der Auslaufteil 10 ist mit einem Auslaufkörper 11, mit dem er durch Verbindungsstege 12, 13 verbunden ist, aus einem Stück gebildet. Er ist an dem dem Einlaufteil 1 zugekehrten Ende an zwei Stellen stufenförmig erweitert; dabei ist die erste Erweiterung zur Aufnahme der Schaufeln 29 eines weiter unten beschriebenen Turbinenrades 26 bestimmt und die zweite Erweiterung an den Außendurchmesser des zugehörigen Endes des Einlaufteils 1 angepaßt, so daß die beiden Enden überlappen und die Stirnseite des Auslaufteils 10 auf die Ringschulter 6 des Einlaufteils 1 stößt. Im Überlappungsbereich ist in die Außenwand des Auslaufteils 10 eine Ringnut 14 eingearbeitet, der ein Dichtring 15 einliegt. Der becherförmige Auslaufkörper 11 erstreckt sich bis in den Bereich der ersten Erweiterung; sein offenes Ende ist dem Einlaufkörper 8 zugekehrt und sein geschlossenes Ende schließt mit dem Ende des Auslaufteils 10 ab. Vom Bereich des Verbindungssteges 12 verjüngt sich der Auslaufkörper 11 bis zu seinem geschlossenen Ende. Der Auslaufteil 10 ist an dem dem Einlaufteil 1 abgekehrten Ende mit einem Befestigungsflansch 16 versehen.

In den Auslaufkörper 11 ist von seinem offenen Ende her ein Lagergehäuse 17 eingesetzt, das mit einem Befestigungsflansch 18 und Schrauben 19 an der Stirnseite des Auslaufkörpers 11 befestigt ist. Durch das Lagergehäuse 17 verläuft eine Welle 20, die an einem Ende des Lagergehäuses 17 in einem Lager 21 und am anderen Ende in dem Befestigungsflansch 18 drehbar gelagert ist. Das Lager 21 ist mit einer axialen Druckentlastung 22 versehen, die nur schematisch angedeutet ist und beispielsweise hydraulisch ausgeführt sein kann. Die Druckmittelleitung verläuft dann durch einen Stopfen 23 am geschlossenen Ende des Lagergehäuses 17. Auf diese Weise wird erreicht, daß der Umlauf der Welle 20 (und damit die Funktion des Turbinenrades 26) von Druckbelastungen, insbesonderen Druckstößen, wenig beeinflußt und praktisch von der Einbaulage des Meßeinsatzes unabhängig wird. Die Welle 20 ist mit einer eingängigen Schnecke 24 versehen, mit der ein (nicht dargestelltes) Schneckenrad kämmt, das über eine ebenfalls nicht dargestellte Übersetzung mit einem Abtriebsglied 25 in Antriebsverbindung steht, das drehbar an dem Lagergehäuse 17 fluchtend zu dem Verbindungssteg 12 gelagert ist. Abgriffe dieser Art sind bekannt und bedürfen daher keiner weiteren Beschreibung.

An einem über den Befestigungsflansch 18 hinaus vorstehenden Ende der Welle 20 ist eine Turbinenrad 26 verkeilt und mit Muttern 27 gesichert. Das Turbinenrad 26 bildet einen gegen den Auslaufkörper 11 zurückspringenden und diesen über einen kurzen Bereich seiner Länge überlappenden Rand 28, dessen Außendurchmesser an den Außendurchmesser des Einlaufkörpers 8 angepaßt ist und der davon vorstehende Schaufeln 29 trägt, die von der ersten Erweiterung im Auslaufteil 10 aufgenommen werden. Auf der dem Befestigungsflansch 18 zugekehrten Fläche des Turbinenrades 26 ist ein Markenträger 30 angebracht, der radial verlaufende, in gleichen Winkelabständen angeordnete Markierungen trägt, die mit einem in den Befestigungsflansch 18 eingesetzten Impulsgeber 31 zusammenwirken (vergleiche zum Beispiel DE—A—2829866). Von dem Impulsgeber 31 ausgehende Signale werden über Verbindungsleitungen 32 abgeleitet, die durch eine Bohrung in dem Verbindungssteg 13 nach außen geführt sind.

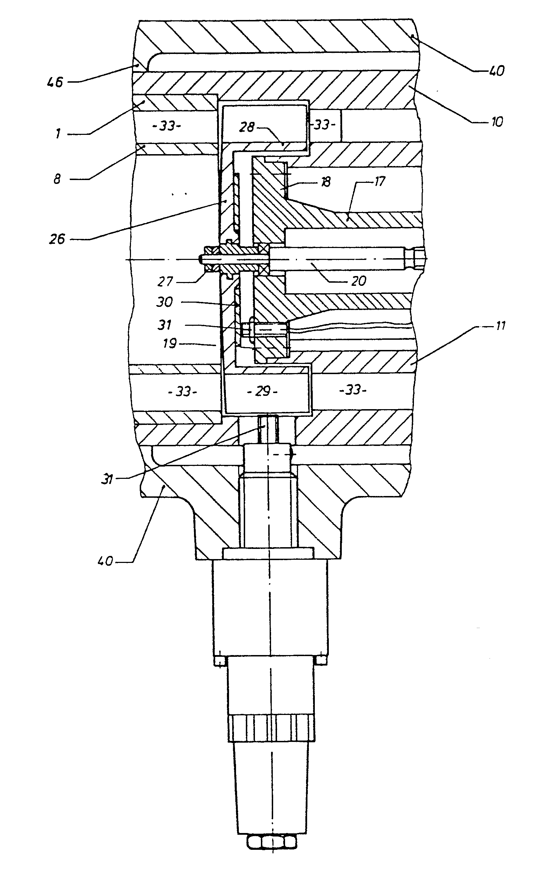

Fig. 2 zeigt in einem Teilschnitt eine modifizierte Ausführung des vorstehend beschriebenen Meßeinsatzes; gleiche Teil sind darin mit gleichen Bezugzeichen versehen. Man erkennt den Einlaufteil 1, den Auslaufteil 10, den Auslaufkörper 11 mit dem Lagergehäuse 17 und das Turbinenrad 26 mit den von seinem Rand 28 vorstehenden Schaufeln 29. Bei dieser Ausführung ist der Impulsgeber 31 in die Wandung des Auslaufteils 10 im Bereich der ersten Erweiterung eingesetzt, so daß der Impulsgeber 31 nicht mit dem auf das Turbinenrad 26 aufgebrachten Markenträger 30, sondern unmittelbar mit den Schaufeln 29 zusammenwirkt.

In dem in Fig. 1 und 2 dargestellten Meßeinsatz wird zwischen der Innenwand des Einlaufteils 1 und der Innenwand des Auslaufteils 10 einerseits und dem Einlaufkörper 8 und dem Auslaufkörper 11 andererseits ein Durchflußkanal 33 gebildet, in den sich die Schaufeln 29 des Turbinenrades 26 hineinerstrecken und der im Bereich zwischen dem Einlaufkörper 8 und dem Auslaufkörper 11 von Rand 28 des Turbinenrades 26 begrenzt wird. Durch diese Ausbildung des Durchflußkanals 33 und dessen auslaufseitige Erweiterung durch die Verjüngung des Auslaufkörpers 11 werden die Druckverluste im Meßeinsatz minimal gehalten.

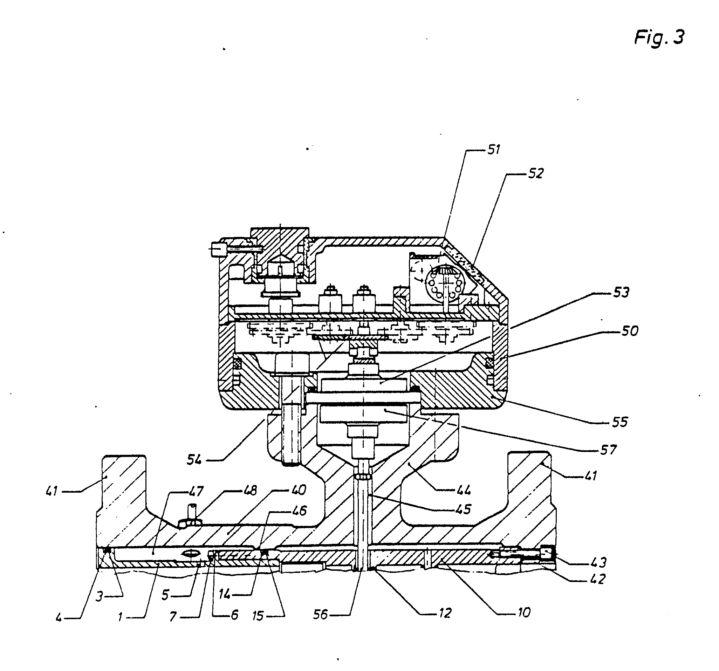

Fig. 3 zeigt einen Turbinenradgaszähler nach Einbau des im Zusammenhang mit Fig. 1 beschriebenen Meßeinsatzes. Gleiche Teile sind darin mit gleichen Bezugszeichen versehen. Der Meßeinsatz ist in ein Rohrstück 40 des Turbinenradgaszählers eingeschoben, das an beiden Enden mit Anschlußflanschen 41 versehen ist und am auslaufseitigen Ende einen Anschlag 42 in Form eines nach innen vorstehenden Rings trägt. Der Meßeinsatz ist bis zur Anlage an den Anschlag 42 in das Rohrstück 40 eingesetzt und mit Schrauben 43 an dem Anschlag 42 befestigt. Er ist dann so angeordnet, daß ein seitlicher Ansatz 44 an dem Rohrstück 40 mit seiner Bohrung 45 zu einem seitlichen Durchgang des Meßeinsatzes ausgerichtet ist, der von fluchtenden Bohrungen im Auslaufteil 10, im Verbindungssteg 12, im Auslaufkörper 11 und im Lagergehäuse 17 gebildet ist. Der Dichtring 15 liegt dann einer gegen den Meßeinsatz vorspringenden Ringschulter 46 des Rohrstücks 40 an, während der Dichtring 4 der Innenwand des Rohrstücks 40 an dessen einlaufseitigem Ende anliegt. Es entsteht so ein axial durch die Dichtringe 4, 15 begrenzter und abgedichteter Druckraum 47 zwischen dem Meßeinsatz und dem Rohrstück 40, der über einen Anschluß 48 an eine Druckmeßeinrichtung und über die Durchlässe 5 im Einlaufteil 1 an den Durchflußkanal 33 angeschlossen ist und zur Messung des statischen Gasdrucks in der Leitung dient, in die der Turbinenradgaszähler eingebaut ist.

Der seitliche Ansatz 44 trägt ein Zählerwerksgehäuse 50 mit einem Zählwerk 51 und einem Sichtfenster 52; das Zählwerksgehäuse 50 enthält auch ein zwischen das Zählwerk 51 und das Abtriebsglied 53 einer Magnetkupplung zwischengeschaltetes, auswechselbares Übersetzungsgetriebe 54. Das Zählwerksgehäuse 50 ist über einen Zählwerkskopf 55 abdichtend an den seitlichen Ansatz 44 angeschraubt. Durch die Bohrung 45 des seitlichen Ansatzes 44 verläuft eine Übertragungswelle 56, die an einem Ende mit dem Abtriebsglied 25 am Lagergehäuse 17 und am anderen Enden mit dem Antriebsglied 57 der Magnetkupplung gekoppelt ist. Dadurch wird eine Antriebsverbindung zwischen dem Zählwerk 51 und der Welle 20 des Turbinenrades 26 hergestellt, die an den jeweiligen Meßeinsatz angepaßt ist und den Durchfluß eines bestimmten Gasvolumens durch den Durchflußkanal 33 entsprechend einer bestimmten Zahl von

Impulsen des Impulsgebers 31 anzeigt. Die Eichung des Turbinenradgaszählers wird somit auf die Eichung des Meßeinsatzes zurückgeführt.

Die Eichung des Meßeinsatzes erfolgt in einem amtlich zugelassenen Prüfstand. Dazu wird der Meßeinsatz in ein entsprechendes Rohrstück mit einem Zählwerk eingesetzt. Ein Luftstrom bekannter Geschwindigkeit Q (m³/h) wird über die Länge einer vorgewählten Zeit t (s) durch den Prüfling hindurchgeleitet; dabei werden der statische Druck P (hPa) an dem Anschluß 48, der barometrische Druck b (hPa) und die Temperatur (°C) der Luft und das Volumen $V_P$ der durchgeflossenen Luft durch die Anzeige des Zählwerks gemessen, sowie die an Impulsgeber auftretende Impulszahl I bestimmt. Das so ermittelte Volumen $V_P$ wird auf Standardbedingungen (1 bar, 0° C) reduziert und mit dem auf entsprechende Weise an einem Normal ermittelten und auf Standardbedingungen reduzierten Volumen $V_N$ verglichen. Treten dabei Abweichungen vom Normal auf, so wird ein der Abweichung entsprechendes Übersetzungsgetriebe 54 ausgewählt, das beim Einbau in das Zählwerk 51 die Abweichung in der Zählwerksanzeige des auf dem Prüfstand geprüften Meßeinsatzes vom Normal kompensiert, so daß das mit dem geprüften Meßeinsatz versehene Zählwerk 51 die gleiche Volumanzeige wie das Normal ergibt. Es wird dann ein Eichzertifikat erstellt, das u.a. die Impulszahl pro m³ enthält und dem das vorerwähnte Übersetzungsgetriebe beigegeben ist.

Fällt ein Turbinenradgaszähler beispielsweise durch einen Defekt im Meßeinsatz aus, so wird zunächst der Zählwerkskopf 55 (und damit das Zählwerksgehäuse 50, das Zählwerk 51, das vorhandene Übersetzungsgetriebe 54 und das Abtriebsglied 53) von dem Rohrstück 40 abgebaut. Danach werden das Antriebsglied 57 der Magnetkupplung und die Übertragungswelle 56 ausgebaut. Nach Ausbau des Rohrstücks 40 aus der Rohrleitung werden die Schrauben 43 gelöst, und der Meßeinsatz wird, gegebenenfalls mit Hilfe einer Ausdrückvorrichtung, aus dem Rohrstück 40 entfernt. Anschließend wird der wie vorstehend beschrieben geeichte Meßeinsatz, gegebenenfalls unter Zuhilfenahme einer Eindrückvorrichtung, bis zum Anstoß an den Anschlag 42 in das Rohrstück 40 eingeschoben und dann mit den Schrauben 43 daran befestigt. Das Rohrstück 40 mit dem geeichten Meßeinsatz wird in die Rohrleitung eingebaut, die Übertragungswelle 56 mit dem Abtriebsglied 25 am Lagergehäuse 17 verbunden und das Antriebsglied 57 der Magnetkupplung wieder an der Übertragungswelle 56 angebracht. Nach Abnahme des Zählwerksgehäuses 50 wird das im Zählwerk 51 vorhandene Übersetzungsgetriebe 54 gegen das mit dem geeichten Meßeinsatz gelieferte Übersetzungsgetriebe ausgetauscht, das Zählwerksgehäuse 50 wieder geschlossen und der Zählwerkskopf 55 wieder an dem seitlichen Ansatz 44 angebracht. Der Turbinenradgaszähler ist damit wieder betriebsfertig und wird dadurch nachgeeicht, daß die Verbindungsleitungen 32 an einen elektronischen Zähler angeschlossen werden. Die nach Durchlauf von 1 m³ gemessene Impulszahl muß dann mit der bei der Eichung ermittelten Impulszahl pro m³ übereinstimmen.

Beispiel

Ein als Prüfling dienender Meßeinsatz für eine Nennweite DN 80 wird in die Eichanlage eingebracht und 28,4 s mit Luft bei einer Strömungsgeschwindigkeit von 158,1 m³/h durchströmt; statischer Druck 972,2 hPa, barometrischer Druck 1008,5 hPa, Temperatur t=21,2°C; Impulszahl I=60 000.

Berechnetes Luftvolumen: $V_P$ = 1,247 m³
Reduziertes Luftvolumen: $V_{P,red}$ = 1,112 m³

Das Normal wird 28,4 s mit Luft bei einer Strömungsgeschwindigkeit von 157,4 m³/h durchströmt; statischer Druck 973,5 hPa; barometrischer Druck 1008,5 hPa, Temperatur t=21,3°; Impulszahl I=12354.

Berechnetes Luftvolumen: $V_N$ = 1,242 m³
Reduziertes Luftvolumen: $V_{N,red}$ = 1,109 m³

Die Reduktion erfolgt nach der Formel

$$V_{red} = V \frac{P \cdot 273,16}{1013 \, (273,16+t)}$$

Das für diesen Meßeinsatz verwendete Zählwerk hat eine geeignete Übersetzung zu der Turbinenradwelle und enthält einen Zählwerksradsatz und ein auswechselbares Übersetzungsgetriebe aus einem Justierradsatz. Der Justierradsatz für den Meßeinsatz besteht aus zwei Zahnrädern mit 35 bzw. 44 Zähnen. Beim Austausch des in das Zählwerk eingebauten Justierradsatzes gegen diesen Justierradsatz ändert sich die gesamte Übersetzung zwischen Turbinenradwelle und Zählwerksanzeige um den Faktor

$$\frac{V_{N,red}}{V_{P,red}},$$

wodurch die Zählwerksanzeige auf den jeweiligen Meßeinsatz justiert wird. Der Gerätefaktor $C_P = I/m^3$ ergibt sich für den das Beispiel bildenden Prüfling zu 48099.4.

**Patentansprüche**

1. Turbinenradgaszähler zur Messung des Durchflusses von Gasen, bestehend aus
   (a) einem Rohrstück (40), das Anschlußmittel (41) und einen seitlichen Ansatz (44) aufweist,
   (b) einem auswechselbaren, koaxial in das Rohrstück (40) einsetzbaren, rohrförmigen Meßeinsatz, der

   — einen rohrförmigen Mantelteil (60), welcher eine radiale Bohrung besitzt, die im eingebauten Zustand des Meßeinsatzes mit dem seitlichen Ansatz (44) des Rohrstücks (40) fluchtet, sowie

— einen Einlaufkörper (8), welcher mittels radialer Rippen (9) koaxial in dem Mantelteil angeordnet ist,

— einen stromab von dem Einlaufkörper (8) koaxial in dem Mantelteil (60) angeordneten Auslaufkörper (11), der zusammen mit dem Einlaufkörper (8) und der Innenwand des Mantelteils (60) einen ringförmigen Durchflußkanal (33) begrenzt und über Verbindungsstege (12, 13) starr mit dem Mantelteil (60) verbunden ist,

— ein koaxial in dem Auslaufkörper (11) angeordnetes Lagergehäuse (17), an dessen Stirnseiten eine Welle (20) drehbar gelagert ist, und

— ein Turbinenrad (26), das an dem aus der einlaufkörperseitigen Stirnseite aus dem Lagergehäuse (17) verstehenden Ende der Welle (20) befestigt ist und dessen Schaufeln (29) in dem Durchflußkanal (33) angeordnet sind,

(c) aufweist, sowie aus einem an dem seitlichen Ansatz (44) angebrachten Zählwerk (51), das das Volumen des den Durchflußkanal (33) durchfließenden Gases angezeigt und über eine Kupplung (57, 53) mit einer Übertragungswelle (56) gekuppelt ist, welche durch eine Bohrung (45) des seitlichen Ansatzes (44) und die radiale Bohrung des Meßeinsatzes hindurch verläuft und mit der Welle (20) des Turbinenrades (26) in Antriebsverbindung steht, dadurch gekennzeichnet, daß

(d) ein mit dem Durchflußkanal (33) verbundener Druckraum (47) mit einem Anschluß (48) für eine Meßeinrichtung zur Messung des statischen Drucks in dem Druckraum (47) vorgesehen ist,

(e) der Meßeinsatz einen mit dem Turbinenrad (26) zusammenwirkenden Impulsgeber (31) enthält, der für ein vorgegebenes Volumen eines bestimmten Gases, das den Durchflußkanal (33) durchfließt, eine bestimmte Anzahl von Impulsen erzeugt, und

(f) das Zählwerk (51) ein auswechselbares Übersetzungsgetriebe (54) aufweist, so daß bei Abweichungen des mit dem Turbinenradgaszähler ermittelten, auf Standardbedingungen reduzierten Volumens von dem an einem Normal geszähler ermittelten Volumen ein der Abweichung entsprechendes Übersetzungsgetriebe zur Kompensation dieser in der Zählwerksanzeige auftretenden Abweichung einbaubar ist.

2. Turbinenradgaszähler nach Anspruch 1, dadurch gekennzeichnet, daß der Druckraum (47) einen an den Enden abgedichteten Ringraum zwischen der Innenwand des Rohrstücks (40) und der Außenwand des Meßeinsatzes bildet.

3. Turbinenradgaszähler nach Anspruch 2, dadurch gekennzeichnet, daß der Druckraum (47) durch zwischen dem Meßeinsatz und der Innenwand des Rohrstücks (40) in axialem Abstand verlaufende Ringschultern axial begrenzt ist und daß im Bereich der Ringschultern Ringnuten (3, 14) und darin einliegende Dichtungsringe (4, 15) vorgesehen sind.

4. Turbinenradgaszähler nach Anspruch 3, dadurch gekennzeichnet, daß der Druckraum (47) und eine Befestigung für den Meßeinsatz an gegenüberliegenden Enden des Rohrstücks (40) ausgebildet sind.

5. Turbinengaszähler nach Anspruch 4, dadurch gekennzeichnet, daß der Meßeinsatz mit Schrauben (43) an einem nach innen vorstehenden Anschlag (42) am auslaufseitigen Ende des Rohrstücks (40) befestigt ist.

6. Turbinenradgaszähler nach einem der Ansprüch 1 bis 5, dadurch gekennzeichnet, daß der Mantelteil (60) aus einem Einlaufteil (1) und einem Auslaufteil (10) überlappende zusammengesetzt und der Überlappungsbereich stromauf von dem Turbinenrad (26) ausgebildet ist.

7. Turbinenradgaszähler nach Anspruch 6, dadurch gekennzeichnet, daß die eine Ringnut (14) im Überlappungsbereich und die andere Ringnut (3) am äußeren Umfang eines Ringfläches (2) am einlaufseitigen Ende des Einlaufteils (1) ausgebildet ist und daß der Einlaufteil im mittleren Teil seiner Länge mit über seinen Umfang verteilten Durchlässen (5) versehen ist.

8. Turbinenradgaszähler nach Anspruch 6 oder 7, dadurch gekennzeichnet, daß der Auslaufteil (10) mit dem Auslaufkörper (11) aus einem Stück gebildet ist.

9. Turbinenradgaszähler nach einem der Ansprüche 6 bis 8, dadurch gekennzeichnet, daß das Lagergehäuse (17) an der dem Turbinenrad (26) abgewandten Seite mit einer axialen Druckentlastung (22) für die Welle (20) des Turbinenrades (26) versehen ist.

10. Turbinenradgaszähler nach einem der Ansprüche 6 bis 9, dadurch gekennzeichnet, daß das Turbinenrad (26) an der dem Lagergehäuse (17) zugekehrten Fläche mit einem Markenträger (30) versehen ist und der Impulsgeber (31) an der dem Markenträger (30) zugekehrten Stirnseite des Lagergehäuses (17) angeordnet ist.

11. Turbinenradgaszähler nach einem der Ansprüche 6 bis 9, dadurch gekennzeichnet, daß der Impulsgeber am Umfang des Turbinenrades (26) angeordnet und in den Auslaufteil (10) im Bereich einer Erweiterung desselben eingesetzt ist.

12. Verfahren zur Eichung eines zur Messung des Durchflusses von Gasen verwendeten Turbinenradgaszählers nach einem der vorstehenden Ansprüche gekennzeichnet durch die folgenden Schritte:

Einbau des Meßeinsatzes in eine Eichanlage, Durchleiten eines Gases während einer vorgewählten Zeit durch den Meßeinsatz bei einer gemessenen Strömungsgeschwindigkeit, einem gemessenen statischen und einem gemessenen barometrischen Druck und bei einer gemessenen Temperatur, Bestimmen der zugehörigen Anzahl von Impulsen und Berechnung und Reduktion des Gasvolumens auf Standardbedingungen, anschließend Durchleiten dieses Gases während einer vorgewählten Zeit durch einen Normalgaszähler bei einer gemessenen Strömungsgeschwindigkeit, einem gemessenen statischen und einem gemessenen barometrischen Druck und bei einer gemessenen Temperatur, Bestimmen der zugehörigen Anzahl von Impulsen und Berechnung und Reduktion das Gasvolumens auf Standardbedingungen,

Bestimmung der Abweichung des berechneten und reduzierten Gasvolumens, das den Meßeinsatz durchsetzt hat, von dem berechneten und reduzierten Gasvolumen, das den Normalgaszähler durchsetzt hat, und Berechnen des Verhältnisses beider Gasvolumina.

Einbau eines auf das Verhältnis der Gasvolumina abgestimmten Übersetzungsgetriebes in das Zählwerk des nunmehr am Betriebsort installierten Meßeinsatzes und Anschließen des Impulsgebers des Turbinenradgaszählers an einen elektronischen Zähler und des Druckraums des Turbinenradgaszählers an eine Meßeinrichtung zur Bestimmung des statischen Drucks in dem Druckraum und Nacheichung des Turbinenradgaszählers am Betriebsort durch Durchleiten des Betriebsgases und Vergleich der an dem elektronischen Zähler angezeigten Anzahl von Impulsen mit dem am Zählwerk des Turbinenradgaszählers angezeigten Gasvolumen.

**Revendications**

1. Compteur de gaz à roue de turbine appelé à mesurer. le débit d'écoulement de gaz, comprenant

(a) un tuyau (40) comprenant des moyens de raccordement (41) et un talon latéral (44),

(b) un insert de mesure tubulaire remplacable qui peut être introduit coaxialement dans le tuyau, et qui comprend

— une chemise tubulaire (60) ayant un alésage radial qui, en état monté de l'insert de mesure, est aligne sur le talon latéral (44) du tuyau (40),
— un corps d'entrée (8) disposé coaxialement dans la chemise au moyen de côtes radiales (9),
— un corps de sortie (11) disposé coaxialement dans la chemise (60) en aval du corps d'entrée (8), qui définit, avec le corps d'entrée (8) et la paroi intérieure de la chemise (60), une conduite d'écoulement annualaire (33), et qui est rigidement relié par l'intermédiare de barrettes de connexion (12, 13) à la chemise (60),
— un boitier de palier (17) qui est disposé coaxialement dans le corps de sortie (11), et sur la face duquel un arbre (20) est monté rotativement, et
— une roue de turbine (26) qui est fixée à l'extrimité de l'arbre (20) saillant de la face du boitier de palier (17) située du côté du corps d'entrée, et dont les aubes (29) sont disposées dans la conduite d'écoulement (33),

(c) ainsi qu'un dispositif compteur (51) monté au talon latéral (44), qui indique le volume du gaz passant par la conduite d'écoulement (33), et qui est couplé par l'intermédiaire d'un accouplement (57, 53) à un arbre de transmission (56) s'étendant par un alésage (45) du talon latéral (44) et par l'alésage radial de l'insert de mesure, l'arbre de transmission étant en connexion de commande avec l'arbre (20) de la roue de turbine (26), caractérisé par le fait que

(d) on a prévu un espace de pression relié à la conduite d'écoulement (33) et ayant un raccord (48) pour un dispositif de mesure appelé à mesurer la pression statique dans l'espace de pression (47),

(e) l'insert de mesure comprend un capteur d'impulsion (31) coopérant avec la roue de turbine (26) et engendrant un nombre défini d'impulsions pour un volume prédéterminé d'un gaz déterminé, et

(f) le dispositif compteur présente un engrenage multiplicateur échangable (54) de sorte qu'en cas de déviations du volume obtenu à l'aide du compteur de gaz à roue de turbine et réduit à des conditions standard, du volume obtenu à un compteur de gaz normal, on peut monter un engrenage multiplicateur conforme à la déviation afin de compenser cette deviation apparaissant dans l'indication du dispositif compteur.

2. Compteur de gaz à roue de turbine selon la revendication 1, caractérisé par le fait que l'espace de pression (47) forme un espace annulaire entre la paroi intérieure du tuyau (40) et la paroi extérieure de l'insert de mesure, cet espace annulaire étant étanché aux extrémités.

3. Compteur de gaz à roue de turbine selon la revendication 2, caractérisé par le fait que l'espace de pression (47) est axialement limité par des épaulement annulaires qui s'étendent entre l'insert de mesure et la paroi intérieure du tuyau (40) avec un espacement axial, et que dans le domaine des épaulements annulaires on a prévu des rainures annulaires (3, 14) recevant des bagues d'étanchéité (4, 15).

4. Compteur de gaz à roue de turbine selon la revendication 3, caractérisé par le fait que l'espace de pression (47) et une fixation pour l'insert de mesure sont formés sur des extrémités opposées du tuyau (40).

5. Compteur de gaz à roue de turbine selon la revendication 4, caractérisé par le fait que l'insert de mesure est fixe par des vis (43) sur une butée (42) saillant vers l'intérieure et située à l'extrémité du tuyau (40) du côté de la sortie.

6. Compteur de gaz à roue de turbine selon la revendication 5, caractérisé par le fait que la chemise (60) est formée d'un élément d'entrée (1) et d'un élément de sortie (10) chevauchant, le domaine de chevauchement étant formé en amont de la roue de turbine (26).

7. Compteur de gaz à roue de turbine selon la revendication 6, caractérisé par le fait que l'une des rainures annulaires (14) est formée dans le domaine de chevauchement et l'autre rainure annulaire (3) sur la circonférence extérieure d'une flasque annulaire (2) à l'extrémité de l'élément d'entrée (1) se trouvant du côté d'entrée, et que l'élément d'entrée est pourvu, dans la partie central de sa longueur, de passages (5) repartis sur sa circonférence.

8. Compteur de gaz à roue de turbine selon la revendication 6 ou 7, caractérisé par le fait que l'élément de sortie (10) est formé d'une seule pièce avec le corps de sortie (11).

9. Compteur de gaz à roue de turbine selon la revendication 6 à 8, caractérisé par le fait que le boitier de palier (17) est pourvu sur le côté opposé à la roue de turbine (26), de moyens de détension axiale (22) pour l'arbre (20) de la roue de turbine (26).

10. Compteur de gaz à roue de turbine selon la revendication 6 à 9, caractérisé par le fait que la roue de turbine (26) est pourvu d'un support de repères (30) sur la surface en face du boitier de palier (17), et que le capteur d'impulsion (31) est disposé à la face du boitier de palier (17) en face du support de repères (30).

11. Compteur de gaz à roue de turbine selon la revendication 6 à 9, caractérisé par le fait que le capteur d'impulsion est disposé à la circonférence de la roue de turbine (26) et introduit dans l'élément de sortie (10) dans le domaine d'un élargissement de celui-ci.

12. Procédé destiné à étalonner un compteur de gaz à roue de turbine employé pour mesurer le débit d'écoulement de gaz, selon l'une des revendications ci-dessus caractérisé par les étapes suivantes:

Monter un insert de mesure dans un dispositif d'étalonnage, passer un gaz pendant un temps préchoisi par l'insert de mesure à une vitesse d'écoulement mesurée, à une pression statique et une pression barométrique mesurée et à une température mesurée, déterminer le nombre d'impulsions correspondant et évaluer le volume de gaz et réduire celui à des conditions standard,

ensuite, passer ce gaz pendant un temps préchoisi par un compteur de gaz normal à une vitesse d'écoulement mesurée, à une pression statique et une pression barométrique mesurée et à une température mesurée, déterminer le nombre d'impulsions correspondant et évaluer le volume de gaz et réduire celui à des conditions standard,

déterminer la déviation du volume de gaz évalué et réduit passé par l'insert de mesure, de volume de gaz évalué et réduit passé par le compteur de gaz normal, et calculer le rapport des deux volumes de gaz,

monter un engrenage multiplicateur adapté au rapport des volumes de gaz dans le dispositif compteur de l'insert de mesure alors installé au lieu d'utilisation, et raccorder le capteur d'impulsion du compteur de gaz à roue de turbine à un compteur électrique, et l'espace de pression du compteur de gaz à roue de turbine à un dispositif de mesure destiné à déterminer la pression statique dans l'espace de pression, et étalonner de nouveau le compteur de gaz à roue de turbine au lieu d'utilisation en faisant passer le gaz opérationnel, et comparer le nombre d'impulsions indiqué par le compateur électrique au volume de gaz indiqué par le dispositif compteur du compteur de gaz à roue de turbine.

**Claims**

1. Turbine wheel gas meter for measuring the throughflow of gaseous media, comprising
(a) a tube member (40) provided with connecting means (41) and a lateral stud (44),
(b) an exchangeable tubular measuring insert adapted to be inserted coaxially into the the tube member (40), which measuring insert has

— a tubular jacket body (60) having a radial bore, which is aligned with the lateral stud (44) of the tube member (40) in the assembled state of the measuring insert,
— an inlet body (8) disposed coaxially within the jacket body by means of radial rips (9),
— an outlet body (11) disposed coaxially within the jacket body (60) downstream from the inlet body (8), said outlet body defining an annular flow passage (33) together with the inlet body (8) and with the interior wall of the jacket body (60) and being connected rigidly to the jacket body (60) by means of connecting webs (12, 13),
— a bearing housing (17) disposed coaxially within the outlet body (11) and having end faces in which a shaft (20) is mounted rotatably, and
— a turbine wheel (26) fixed to the end of the shaft (20) projecting from that end face of the bearing housing (17) which faces the inlet body, the blades (29) of the turbine wheel being disposed in the flow passage (33),

(c) and comprising counting means (51) mounted on the lateral stud (44) and indicating the volume of gas flowing through the flow passage (33), which counting means (51) is coupled by a clutch (57, 53) to a transmission shaft (56) which extends through a bore (45) in the lateral stud (44) and through the radial bore of the measuring insert and which is drivingly connected to the shaft (20) of the turbine wheel (26), characterized in that
(d) a pressure space (47) connected to the flow passage (33) and having a connector (48) for connection to a measuring means for measuring the static pressure in the pressure space (47) is provided,
(e) the measuring insert includes a pulse generator (31) cooperating with the turbine wheel (26), which pulse generator (31) generates a defined number of pulses corresponding to a predetermined volume of a certain gas which flows through the flow passage (33), and
(f) the counting means (51) has an exchangeable transmission means (54), such that, when the volume determined by means of the turbine wheel gas meter and reduced to standard conditions differs from the volume determined at a standard gas meter, a transmission gear corresponding to the difference is adapted to be installed for compensation for this difference occurring in the counter indication.

2. Turbine wheel gas meter as set forth in claim 1, characterized in that the pressure space (47) forms an annular space between the interior wall of the tube member (40) and the exterior wall of the measuring insert, said annular space being sealed at its ends.

3. Turbine wheel gas meter as set forth in claim 2, characterized in that the pressure space (47) is axially defined by annular shoulders extending between the measuring insert and the interior wall of the tube member (40) at an axial distance, and annular grooves (3, 14) receiving sealing rings (4, 15) are provided in the range of the annular shoulders.

4. Turbine wheel gas meter as set forth in claim 3, characterized in that the pressure space (47) and a mounting means for the measuring insert are formed at opposite ends of the tube member (40).

5. Turbine wheel gas meter as set forth in claim 4, characterized in that the measuring insert is secured by means of screws (43) to an inwardly projecting stop (42) formed at the outlet end of the tube member (40).

6. Turbine wheel gas meter as set forth in anyone of the claims 1 to 5, characterized in that the jacket body (60) is formed by an inlet member (1) and an outlet member (10) interconnected overlappingly with the overlap region being formed downstream from the turbine wheel (26).

7. Turbine wheel gas meter as set forth in claim 6, characterized in that the first annular groove (14) and the second annular groove (3) each are formed in the overlap region and at the outer circumference of an annular flange (2) at the inlet end of the inlet member (1), respectively, and the inlet member is provided with passages (5) distributed over the circumference of the central portion of its length.

8. Turbine wheel gas meter as set forth in claim 6 or 7, characterized in that the outlet member (10) is formed integral with the outlet body (11).

9. Turbine wheel gas meter as set forth in anyone of the claims 6 to 8, characterized in that the bearing housing (17) is provided with an axial pressure relieving means (22) effective at the shaft (20) of the turbine wheel (26) on the side of said housing (17) which is remote from the turbine wheel (26).

10. Turbine wheel gas meter as set forth in anyone of the claims 6 to 9, characterized in that the turbine wheel (26) is provided with a mark carrier (30) at the face facing the bearing housing (17) and the pulse generator (31) is located at the end face of said bearing housing (17) facing the mark carrier (30).

11. Turbine wheel gas meter as set forth in anyone of the claims 6 to 9, characterized in that the pulse generator is located at the circumference of the turbine wheel (26) and is inserted into the outlet member (10) in the range of an enlargement thereof.

12. Method for calibrating a turbine wheel gas meter for measuring the throughflow of gaseous media as set forth in anyone of the preceding claims, characterized by the following steps:

Installing the measuring insert in a calibration system, passing a gas through the measuring insert for a pre-selected period of time and at a measured flow rate, at a measured static and at a measured barometric pressure and at a measured temperature, determining the associated number of pulses and evaluating the gas volume and reducing the same to standard conditions,

subsequently passing this gas through a standard gas meter for a pre-selected period of time and at a measured flow rate, at a measured static and at a measured barometric pressure and at a measured temperature, determining the associated number of pulses and evaluating the gas volume and reducing the same to standard conditions,

determining the difference between the evaluated and the reduced gas volume passed through the measuring insert and the evaluated and reduced gas volume passed through the standard gas meter, and calculating the ratio of the two gas volumes,

installing a transmission gear adapted to the ratio of said gas volumes in the counter of the measuring insert now installed at the location of use, and connecting the pulse generator of said turbine wheel gas meter to an electronic counter and the pressure space in said turbine wheel gas meter to a measuring means to determine the static pressure in the pressure space and re-calibrating said turbine wheel gas meter at the location of use by passing the operational gas therethrough and by comparing the number of pulses indicated at said electronic counter to the gas volume indicated at the counter of said turbine wheel gas meter.

# FIG.1

*Fig. 3*